(19) Europäisches Patentamt / European Patent Office / Office européen des brevets

(11) **EP 2 962 555 A1**

(12) **EUROPEAN PATENT APPLICATION**

(43) Date of publication:
**06.01.2016 Bulletin 2016/01**

(51) Int Cl.:
**A01K 1/015** (2006.01)

(21) Application number: **14175314.5**

(22) Date of filing: **01.07.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Earls, Michael
Athenry,
County Galway (IE)**

(72) Inventor: **Earls, Michael
Athenry,
County Galway (IE)**

(74) Representative: **Brophy, David Timothy et al
FRKelly
27 Clyde Road
Ballsbridge
Dublin 4 (IE)**

Remarks:
Amended claims in accordance with Rule 137(2) EPC.

(54) **Mats for slatted floors of animal houses**

(57) A mat (10) for a slatted floor of an animal house has an upper surface (22) to bear the weight of an animal, a lower surface (24) for overlaying the slatted floor, and a plurality of edges (18, 20). The mat is provided with drainage channels (42) below the upper surface and leading to said edges, the drainage channels being open to said upper surface and sloping downwardly towards an edge to assist is run-off of waste from the mat. The aggregate surface area of the upper surface and drainage channels has an average slope relative to the horizontal, in use, of from 3 degrees to 13 degrees, and more preferably at least 5 degrees.

FIG. 1

EP 2 962 555 A1

## Description

### Technical Field

This invention relates to flooring for animal houses and in particular to mats which are designed to overlay slatted floors providing increased comfort to the animals while allowing waste to drain into the gaps between slats.

### Background Art

EP 1 232 687 discloses rubber floor tiles which are overlaid on a concrete slatted floor. The mats are in the form of a pair of parallel elongated panels, connected by bridging sections, such that the panels are dimensioned to lie on and cover a single slat, and the bridging sections include anchoring projections which are inserted into the gap between the slats. Between bridging sections, along the elongated axis of the mat, there are slots which coincide with the underlying gap, allowing waste to drain into the slots and through the gaps into an underlying tank. Waste can also drain over the outer edge of each panel, also into a gap outside the slat on which the panel lies.

Each panel has a profile with a central ridge running the length of the mat, the upper surface sloping away gently from the ridge to meet a flat section along the inner and outer edges of the panel.

A disadvantage with such mats is that the waste may not drain away sufficiently quickly and may collect and lie on the flat sections adjacent the edges. This raises the ammonia levels in the animal house, and it would be advantageous to ensure more rapid collection of the waste into the tank underlying the slatted floor.

### Disclosure of the Invention

There is provided a mat for a slatted floor of an animal house, the mat having an upper surface to bear the weight of an animal, a lower surface for overlaying the slatted floor, and a plurality of edges, wherein the mat is provided with drainage channels below the upper surface and leading to said edges, said drainage channels being open to said upper surface and sloping downwardly towards an edge to assist in run-off of waste from the mat, and wherein the aggregate surface area of the upper surface and drainage channels has an average slope relative to the horizontal, in use, of from 3 degrees to 13 degrees.

The mat of the invention permits good drainage to be achieved by having drainage channels that are angled more aggressively than the sloped mat surfaces of EP 1232 687 and other known rubber mats.

The upper surface, which bears the weight of the animal need not be aggressively sloped if the average slope is from 3 to 13 degrees. It has been found that by using these sloped drainage channels, the upper surface of the mats need not be angled steeply or at all, so that the surface is more regular for animals and workers, so that it is easier to clean (e.g. with an automated scraper system or manually using scraping or sweeping tools or "squeegees"), and yet the average drainage angle ensures that the waste runs off sufficiently quickly so as to achieve reduced ammonia levels.

Preferably, the average slope is calculated without reference to any slots, voids, or holes through the mat.

So for example, if a mat spans two slats and has a central drainage slot, the area of that slot will preferably be omitted when calculating the average slope over the remaining mat area.

Preferably, the average slope of the drainage channels alone is from 6 degrees to 25 degrees.

Preferably, the ratio between the aggregate area of the upper surface and the aggregate area of the drainage channels is between 30:70 and 70:30, more preferably between 40:60 and 60:40 and more preferably still between 45:55 and 55:45.

It will be appreciated that a significant portion of the mat's area is used for drainage channels in such preferred embodiments, i.e. at least 30%. This allows the drainage to play a significant role in how the mat deals with waste deposited on its upper surface. A most preferred mat has roughly half its area covered by the drainage channels, i.e. between 45% and 55%.

Preferably, the upper surface occupies a first area of the mat and said drainage channels occupy a second area of the mat, and said average slope is calculated as a weighted average according to the respective areas and average angles of the upper surface and drainage channels.

Optionally, said drainage channels may include a plurality of sub-sections each at a different respective angle and occupying a different area, and wherein an average drainage channels angle is calculated as a weighted average according to the respective areas and angles of said sub-sections.

The drainage channels need not even have discrete areas with different slopes but could have continuously changing slopes, whose average angle can be calculated using integration or using empirical methods.

Preferably, said drainage channels extend between an upper point and a lower point when the mat is disposed in its use position, the upper points being at or below the upper surface of the mat.

In a preferred embodiment, the upper point of a drainage channel is located away from the edges of the mat and the drainage channel slopes downwardly away from said upper point in the direction of an edge, such that there is a pair of said lower points, each associated with a respective edge.

Preferably where the mat has one or more internal edges defining a void, slot or hole through the mat, at least a portion of said drainage channels have a lower point at said internal edge.

Preferably, the upper point is located at a position in the central 30% of the width of the panel, more preferably the central 10% of the width of the panel.

A preferred embodiment of mat is provided in the form of at least two parallel elongated panels each having elongated outer edges, the panels being connected to one another in a spaced-apart configuration so as to define at least one elongated slot defined by one or more internal edges separating said panels, the panels being configured to overlay parallel slats of an underlying slatted floor, and the slot being configured to overlay a gap between said parallel slats and to allow material to flow from an upper surface of the mat through said slot and into said gap to a void below the floor.

Preferably, the majority of said drainage channels are elongated and disposed at an angle of between 60 and 120 degrees to the elongate axis of the mat, said elongate axis being defined in use by the axis of a slat on which the mat is to be disposed.

More preferably, the majority of said drainage channels are substantially transverse to said elongate axis and are disposed at an angle of between 75 and 105 degrees, more preferably 85 to 95 degrees, to said elongate axis.

In one particularly preferred embodiment, the drainage channels are at 90 degrees to the axis of the mat.

Preferably, said drainage channels are disposed at intervals along said axial direction, and said upper surface comprises a plurality of surface sections disposed between adjacent drainage channels.

In a particularly preferred embodiment, there are alternating strips of upper surface and of drainage channels, and ideally these are relatively narrow, e.g. less than 40mm and more preferably less than 25 mm, so that all points on the upper surface are very close to a drainage channel to assist in efficient waste drainage.

Preferably, the aggregate surface area of the upper surface and drainage channels has an average slope relative to the horizontal, in use, of at least 5 degrees and more preferably at least 6 degrees.

By achieving a six degree or greater average slope, when used in cattle sheds, the ammonia emissions can be kept below a level of 2.5Kg $NH_3$ per cow per annum.

Preferably, the majority of said drainage channels have a width of 10 mm to 25 mm, and preferably more than 80% of the drainage channels have said width.

Preferably, the ratio between the aggregate area of the upper surface and the aggregate area of the drainage channels is between 30:70 and 70:30, more preferably between 40:60 and 60:40 and more preferably still between 45:55 and 55:45.

In preferred mats, said drainage channels extend substantially across the width of a panel of the mat defined between a pair of opposite mat edges.

Preferably, the upper surface of the mat is sufficiently flat so as to accommodate and be cleaned by an automated scraper system. In particularly preferred embodiments, the upper surface is fully flat.

## Brief Description of the Drawings

Fig. 1 is a perspective view of a mat according to the invention, with surface shading indicated;

Fig. 2 is a perspective view of a mat according to the invention, rendered as a line drawing with no surface shading;

Fig. 3 is a perspective view of a floor of an animal house with a plurality of the mats of Figs. 1 and 2 in place;

Fig. 4 is a side elevation;

Fig. 5 is a top plan view;

Fig. 6 is a cross section taken through the line D-D of Fig. 5;

Fig. 7 is a detail of the area marked "E" in Fig. 5; and

Fig. 8 is a detail of the area marked "F" in Fig. 4.

**Detailed Description of Preferred Embodiments**

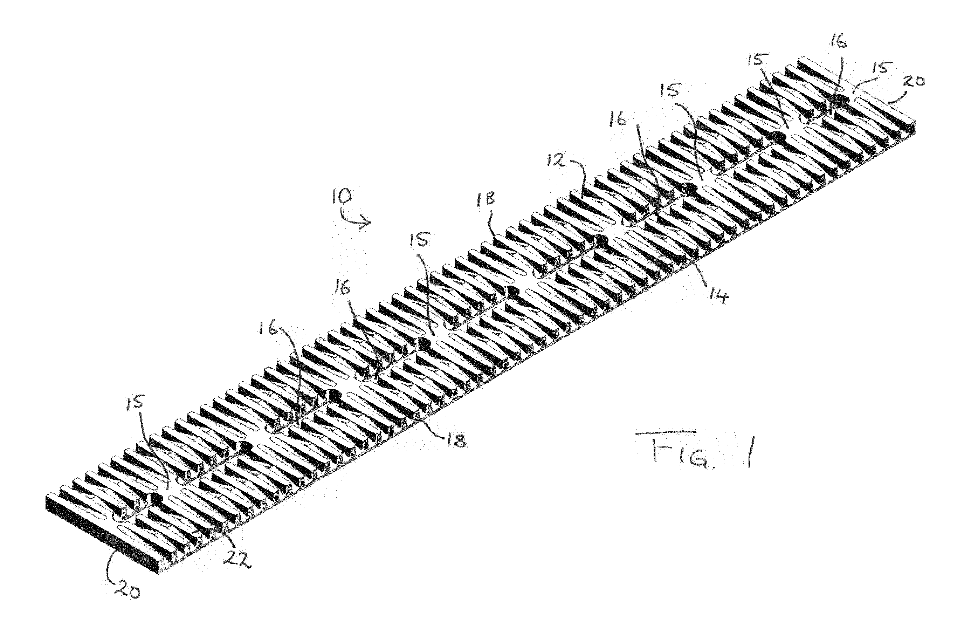

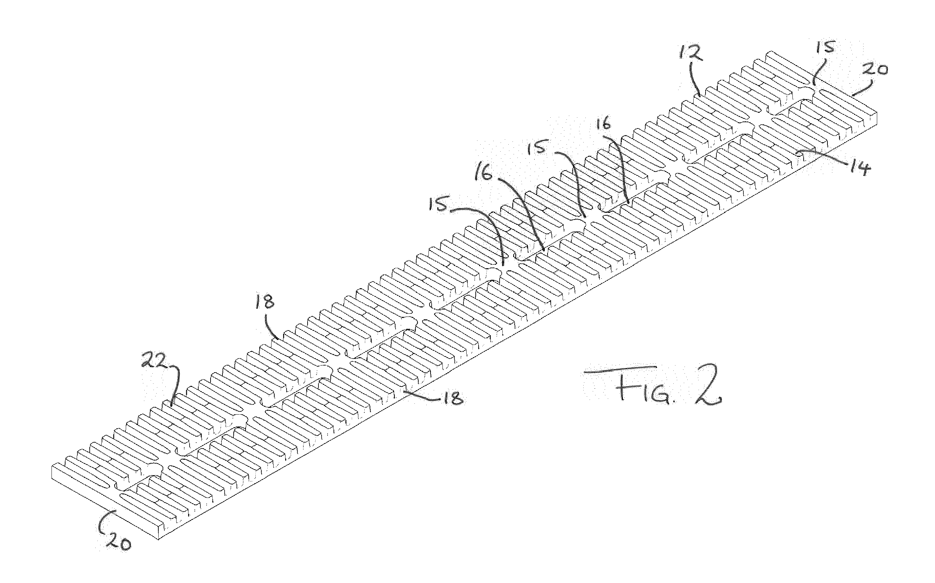

Referring to Figs. 1 and 2 there is indicated, generally at 10, a mat according to the invention. The same mat is shown in Figs. 1 and 2, but with alternative renderings to help illustrate the orientation of various surfaces.

The mat 10 is in the form of an elongated, flat rectangle which is subdivided into two parallel elongated panels 12, 14, connected by bridging sections 15 disposed at intervals along the length of the centreline of the mat. Between bridging sections 15 there are slots 16 through the mat allowing waste to drain therethrough.

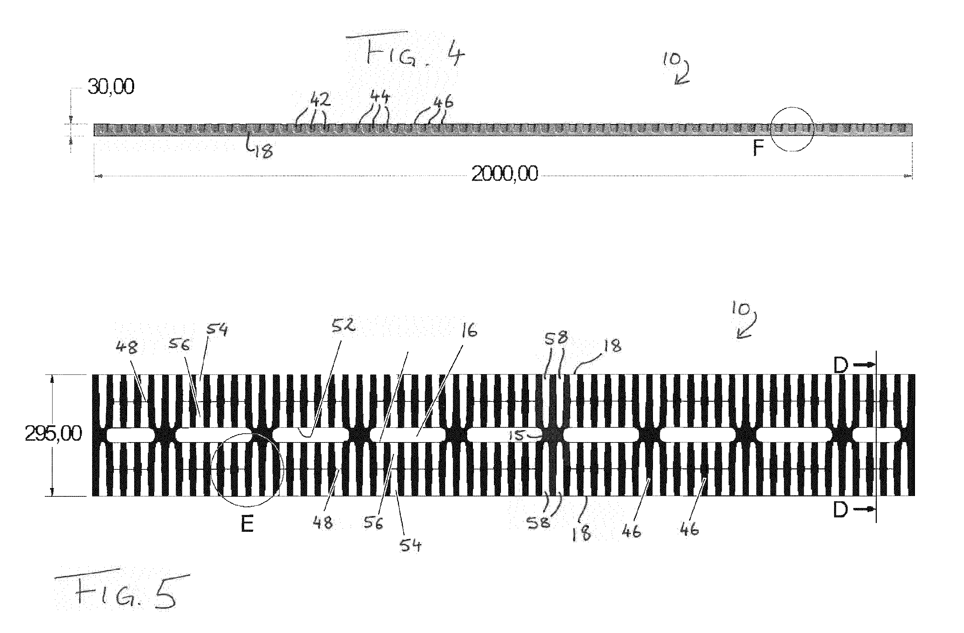

The mat has a pair of elongate side edges 18 and shorter end edges 20, an upper surface 22 which in use bears the weight of the animals, and a lower surface 24 (Fig. 4) which in use lies on top of and contacts the underlying slats of a floor.

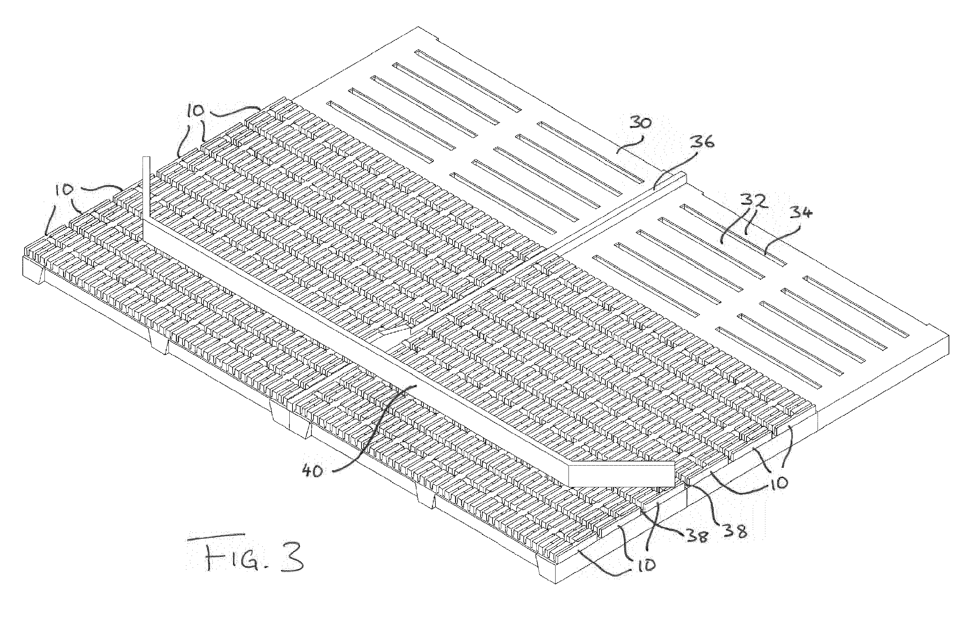

Fig. 3 shows an example of an installation of a plurality of mats 10 on a slatted floor 30. Six mats are shown in place with a portion of the floor uncovered. It can be seen that the floor 30 is conventional and is formed as a series of integral elongated slats 32 separated by gaps 34 which lead to an underlying collection tank (not shown). It can be seen that the floor is divided by a rail 36 with six mats disposed on either side of the rail. Each mat covers a pair of adjacent slats so that waste can drain off any given panel 12, 14 (Fig. 1) either through the slots 16 running along the centre line of a mat, or into the gaps 38 between any pair of adjacent mats and thereby into the gaps 34 between slats 32.

Also shown in Fig. 3 is a scraper 40 which is mounted on the rail 36 and which can be driven along the rail to scrape across the upper surfaces 22 of the mats and thereby clean any waste that may be standing on the mats' upper surfaces by forcing the waste into the slots 16 or gaps 38.

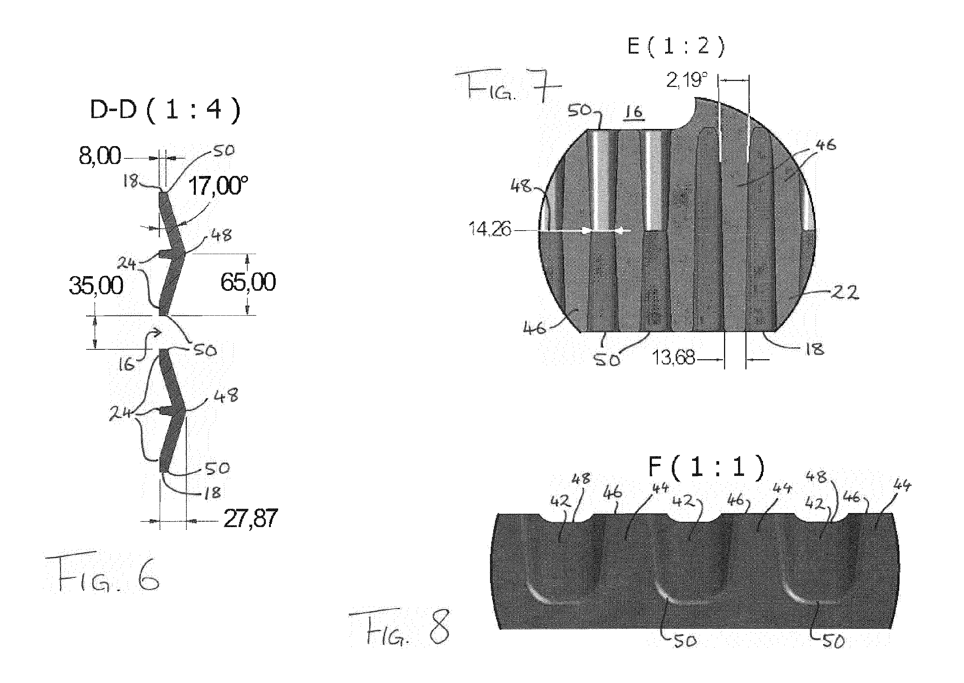

Referring to Figs. 4 and 5, the mat of Figs. 1 and 2 is shown in side elevation and top plan view, respectively. Dimensions, which are purely illustrative and non-limiting, are indicated in millimetres. Fig. 4 shows one side edge 18 revealing a plurality of drainage channels 42 interposed alternately between a series of formations 44 with flat upper surfaces 46, seen best in the detail of Fig. 8.

The flat upper surfaces 46 are shaded black in Fig. 5 and together these shaded portions define the upper surface 22 of the mat. It will be noted that the upper surface is discontinuous and is formed as an aggregate of several separate surface sections 46.

Referring additionally to Fig. 6, the drainage channels 42 are formed as sloped channels falling away from a ridge 48 which runs along the centre line of a given panel 12, 14. The ridge 48 in this embodiment is slightly below the flat surfaces 46 (see Fig.8) and the slope of the channels is 17 degrees downwards from the horizontal in each direction, such that the drainage channels run from the ridge to a pair of fall-off points 50 (see also Figs. 6 and 7), one of which is located at an outer edge 18, the other of which is located at the inner edge 52 i.e. along the slot 16. Thus each drainage channel which is at the position of a slot 16 is in two parts 54, 56, each sloping down in a different direction away from the ridge 48. The drainage channels which are aligned with the bridging portions 15 are undivided and slope downwardly from their inner edge at the bridging portion to the outer edge 18 of the mat.

The drainage channels thus form in aggregate a discontinuous sloped surface at 17 degrees from the horizontal in use, i.e. when the mat is in place on a level slat floor. It is therefore possible to attribute an average slope to the entirety of the upwardly facing surfaces of the mat 10, i.e. the combined surface area of the drainage channels 50 and the upper surface 22.

In the case of the mat illustrated in Figs. 1-8, the areas of the various surfaces and voids are as follows:

Total area of mat = 2000 mm*295 mm = 0.59 m$^2$

Area of slots = 0.051836 m$^2$

Area of mat less slots = 0.539164 m$^2$

(this latter figure is the combined area of flat surfaces 46/22 plus drainage channels 50)

Total flat area 46/22 = 0.268138 m$^2$

Total drainage channel area = 0.271026 m$^2$

From these numbers we can calculate the average slope of the mat less slots area, which is the weighted average of the 0 degree flat area (covering 0.268138 m$^2$) and the 17 degree sloped area (covering 0.271026 m$^2$):

$$\{(0 * 0.268138) + (17 * 0.271026)\} / 0.538164 = 8.561409 \text{ degrees}$$

Thus, by combining more steeply sloped channels with flat upper sections, an average slope of greater than 8.5 degrees can be achieved. The skilled person will appreciate that a similar calculation can be carried out for different combinations of angled surfaces, including using integration to calculate the aggregate average angle for surfaces whose sloped change continuously.

The invention is directed to achieving an average slope of between 3 and 13 degrees. In certain cases, as with the illustrated embodiment, the average is considerably higher, preferably more than 6 degrees.

It has been found that by using these sloped drainage channels, the upper surface of the mats need not be angled steeply or at all, so that the surface is more regular for animals and workers, so that it is easier to clean (e.g. with a scraper system as in Fig. 3 or manually using scraper tools), and yet the average drainage angle ensures that the waste runs off sufficiently quickly as to achieve reduced ammonia levels.

By achieving a six degree or greater average slope, when used in cattle sheds, the ammonia emissions are kept below a level of 2.5Kg $NH_3$ per cow per annum.

It will be appreciated that the design of the mat can vary considerably within the scope of the invention. For example, the sloped surfaces need not be divided at a ridge. The ridge need not be central. The angle of the sloped surfaces need not be uniform either between different surfaces or within a single surface. The ridges can be level with or below the upper surface level.

While the invention is illustrated with a two-panel mat, designed to overlay a pair of adjacent slats, it could equally be implemented with other mat designs, including single panel mats, which are dimensioned to fit over a single slat, or multi-panel mats designed to straddle several slats.

## Claims

1. A mat for a slatted floor of an animal house, the mat having an upper surface to bear the weight of an animal, a lower surface for overlaying the slatted floor, and a plurality of edges, wherein the mat is provided with drainage channels below the upper surface and leading to said edges, said drainage channels being open to said upper surface and sloping downwardly towards an edge to assist in run-off of waste from the mat, and wherein the aggregate surface area of the upper surface and drainage channels has an average slope relative to the horizontal, in use, of from 3 degrees to 13 degrees.

2. The mat of claim 1, wherein the average slope of the drainage channels alone is from 6 degrees to 25 degrees.

3. The mat of any preceding claim, wherein the ratio between the aggregate area of the upper surface and the aggregate area of the drainage channels is between 30:70 and 70:30, more preferably between 40:60 and 60:40 and more preferably still between 45:55 and 55:45.

4. The mat of any preceding claim, wherein said upper surface occupies a first area of the mat and said drainage channels occupy a second area of the mat, and wherein said average slope is calculated as a weighted average according to the respective areas and average angles of the upper surface and drainage channels.

5. The mat of any preceding claim, wherein said drainage channels include a plurality of sub-sections each at a different respective angle and occupying a different area, and wherein an average drainage channels angle is calculated as a weighted average according to the respective areas and angles of said sub-sections.

6. The mat of any preceding claim, wherein said drainage channels extend between an upper point and a lower point when the mat is disposed in its use position, the upper points being at or below the upper surface of the mat.

7. The mat of claim 6, wherein the upper point of a drainage channel is located away from the edges of the mat and wherein the drainage channel slopes downwardly away from said upper point in the direction of an edge, such that there is a pair of said lower points, each associated with a respective edge.

8. The mat of claim 7, further comprising one or more internal edges defining a void, slot or hole through the mat, wherein at least a portion of said drainage channels have a lower point at said internal edge.

9. The mat of any preceding claim, when provided in the form of at least two parallel elongated panels each having elongated outer edges, the panels being connected to one another in a spaced-apart configuration so as to define at least one elongated slot defined by one or more internal edges separating said panels, the panels being configured to overlay parallel slats of an underlying slatted floor, and the slot being configured to overlay a gap between said parallel slats and to allow material to flow from an upper surface of the mat through said slot and into said gap to a void below the floor.

10. The mat of any preceding claim, wherein the majority of said drainage channels are elongated and disposed at an angle of between 60 and 120 degrees to the elongate axis of the mat, said elongate axis being defined in use by the axis of a slat on which the mat is to be disposed, and preferably wherein the majority of said drainage channels are substantially transverse to said elongate axis and are disposed at an angle of between 75 and 105 degrees, more preferably 85 to 95 degrees, to said elongate axis.

11. The mat of claim 10, wherein said drainage channels are disposed at intervals along said axial direction, and wherein said upper surface comprises a plurality of surface sections disposed between adjacent drainage channels.

12. The mat of any preceding claim, wherein the aggregate surface area of the upper surface and drainage channels has an average slope relative to the horizontal, in use, of at least 5 degrees and more preferably at least 6 degrees.

13. The mat of any preceding claim, wherein the majority of said drainage channels have a width of 10 mm to 25 mm, and preferably wherein more than 80% of the drainage channels have said width.

14. The mat of any preceding claim wherein said drainage channels extend substantially across the width of a panel of the mat defined between a pair of opposite mat edges.

15. The mat of any preceding claim, wherein the upper surface is sufficiently flat to accommodate and be cleaned by an automated scraper system.

**Amended claims in accordance with Rule 137(2) EPC.**

1. A mat for a slatted floor of an animal house, the mat having an upper surface (22) to bear the weight of an animal, a lower surface (20) for overlaying at least one slat of the slatted floor, a plurality of internal edges defining a void, slot or hole (16) through the mat, and a plurality of external edges (18, 20), wherein the mat is provided with drainage channels (42, 50) below the upper surface and leading to said internal and external edges, said drainage channels being open to said upper surface and sloping downwardly towards an edge to assist in run-off of waste from the mat, and wherein the aggregate surface area of the upper surface and drainage channels has an average slope relative to the horizontal, in use, of from 3 degrees to 13 degrees.

2. The mat of claim 1, wherein the average slope of the drainage channels alone is from 6 degrees to 25 degrees.

3. The mat of any preceding claim, wherein the ratio between the aggregate area of the upper surface and the aggregate area of the drainage channels is between 30:70 and 70:30, more preferably between 40:60 and 60:40 and more preferably still between 45:55 and 55:45.

4. The mat of any preceding claim, wherein said upper surface occupies a first area of the mat and said drainage channels occupy a second area of the mat, and wherein said average slope is calculated as a weighted average according to the respective areas and average angles of the upper surface and drainage channels.

5. The mat of any preceding claim, wherein said drainage channels include a plurality of sub-sections each at a different respective angle and occupying a different area, and wherein an average drainage channels angle is calculated as a weighted average according to the respective areas and angles of said sub-sections.

6. The mat of any preceding claim, wherein said drainage channels extend between an upper point and a lower point when the mat is disposed in its use position, the upper points being at or below the upper surface of the mat.

7. The mat of claim 6, wherein the upper point of a drainage channel is located away from the edges of the mat and wherein the drainage channel slopes downwardly away from said upper point in the direction of an edge, such that there is a pair of said lower points, each associated with a respective edge.

8. The mat of any preceding claim, when provided in the form of at least two parallel elongated panels each having elongated outer edges, the panels being connected to one another in a spaced-apart configuration so as to define at least one elongated slot defined by one or more internal edges separating said panels, the panels being configured to overlay parallel slats of an underlying slatted floor, and the slot being configured to overlay a gap between said parallel slats and to allow material to flow from an upper surface of the mat through said slot and into said gap to a void below the floor.

9. The mat of any preceding claim, wherein the majority of said drainage channels are elongated and disposed at an angle of between 60 and 120 degrees to the elongate axis of the mat, said elongate axis being defined in use by the axis of a slat on which the mat is to be disposed, and preferably wherein the majority of said drainage channels are substantially transverse to said elongate axis and are disposed at an angle of between 75 and 105 degrees, more preferably 85 to 95 degrees, to said elongate axis.

10. The mat of claim 10, wherein said drainage channels are disposed at intervals along said axial direction, and wherein said upper surface comprises a plurality of surface sections disposed between adjacent drainage channels.

11. The mat of any preceding claim, wherein the aggregate surface area of the upper surface and drainage channels has an average slope relative to the horizontal, in use, of at least 5 degrees and more preferably at least 6 degrees.

12. The mat of any preceding claim, wherein the majority of said drainage channels have a width of 10 mm to 25 mm, and preferably wherein more than 80% of the drainage channels have said width.

13. The mat of any preceding claim wherein said drainage channels extend substantially across the width of a panel of the mat defined between a pair of opposite mat edges.

14. The mat of any preceding claim, wherein the upper surface is sufficiently flat to accommodate and be cleaned by an automated scraper system.

FIG. 1

Fig. 2

FIG. 3

EP 2 962 555 A1

FIG. 4

30,00

42   44   46

18

2000,00

F

10

48   56   54   52   16   58   18

295,00

15

D

E   48   56   58   18   46   46

54

D

FIG. 5

10

EP 2 962 555 A1

D-D ( 1 : 4 )

8,00 — 50

18

17,00°

48

24

35,00

65,00

50

16

24

48

50

18

27,87

FIG. 6

E ( 1 : 2 )

FIG. 7

2,19°

50

16

48

46

14,26

46

50

13,68

22

18

F ( 1 : 1 )

42 48 46 44 42 46 44 48 46 44

50 50

FIG. 8

EP 2 962 555 A1

Europäisches
Patentamt

European
Patent Office

Office européen
des brevets

# EUROPEAN SEARCH REPORT

**Application Number**

EP 14 17 5314

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 532 228 A1 (BERKEL BETON [NL]) 12 December 2012 (2012-12-12) * paragraph [0002] * * paragraph [0008] - paragraph [0009]; figures 1-4 * | 1-15 | INV. A01K1/015 |
| X | WO 2009/136376 A1 (VELDEN BETON NV V D [BE]; VAN DER VELDEN GERT [BE]) 12 November 2009 (2009-11-12) * page 9 - page 17; figure 12 * | 1-14 | |
| A | EP 0 609 581 A1 (WEELINK JOHANNES M W [NL]) 10 August 1994 (1994-08-10) * figure 4 * | 1-15 | |
| A | WO 94/00978 A1 (FIELDQUARD LIMITED [GB]; PELTERS CO LIMITED [GB]; BADEN POWELL ROBERT) 20 January 1994 (1994-01-20) * page 13; figures 1-3 * | 1-15 | |

**TECHNICAL FIELDS SEARCHED (IPC)**

A01K

The present search report has been drawn up for all claims

| Place of search | Date of completion of the search | Examiner |
|---|---|---|
| The Hague | 6 January 2015 | Moeremans, Benoit |

EPO FORM 1503 03.82 (P04C01)

## ANNEX TO THE EUROPEAN SEARCH REPORT
## ON EUROPEAN PATENT APPLICATION NO.

EP 14 17 5314

This annex lists the patent family members relating to the patent documents cited in the above-mentioned European search report.
The members are as contained in the European Patent Office EDP file on
The European Patent Office is in no way liable for these particulars which are merely given for the purpose of information.

06-01-2015

| Patent document cited in search report | | Publication date | Patent family member(s) | | Publication date |
|---|---|---|---|---|---|
| EP 2532228 | A1 | 12-12-2012 | EP | 2532228 A1 | 12-12-2012 |
| | | | NL | 2006896 C | 10-12-2012 |
| WO 2009136376 | A1 | 12-11-2009 | AU | 2009245348 A1 | 12-11-2009 |
| | | | BE | 1018081 A3 | 06-04-2010 |
| | | | CA | 2723890 A1 | 12-11-2009 |
| | | | DK | 2288255 T3 | 02-09-2013 |
| | | | EP | 2288255 A1 | 02-03-2011 |
| | | | NZ | 588821 A | 31-05-2013 |
| | | | RU | 2010150366 A | 20-06-2012 |
| | | | US | 2011056154 A1 | 10-03-2011 |
| | | | WO | 2009136376 A1 | 12-11-2009 |
| EP 0609581 | A1 | 10-08-1994 | EP | 0609581 A1 | 10-08-1994 |
| | | | NL | 9300207 A | 01-09-1994 |
| | | | US | 5477654 A | 26-12-1995 |
| WO 9400978 | A1 | 20-01-1994 | AU | 4507393 A | 31-01-1994 |
| | | | EP | 0647094 A1 | 12-04-1995 |
| | | | WO | 9400978 A1 | 20-01-1994 |

EPO FORM P0459

For more details about this annex : see Official Journal of the European Patent Office, No. 12/82

**REFERENCES CITED IN THE DESCRIPTION**

**Patent documents cited in the description**

- EP 1232687 A